# EUROPEAN PATENT APPLICATION

(11) **EP 4 492 170 A1**
(43) Date of publication of application: **15.01.2025**
(21) Application number: 24185233.4
(22) Date of filing: 28.06.2024
(51) Int. Cl.: G05B 19/409, B30B 15/26

(54) **DISPLAY DEVICE OF PRESS MACHINE AND PRESS WORKING MONITORING METHOD**

(30) Priority: 06.07.2023 JP 2023111160
(71) Applicant: Aida Engineering Ltd., Sagamihara-shi Kanagawa 252-5181 (JP)
(72) Inventor: ITO, Satoshi, Sagamihara-shi, 252-5181 (JP); SUZUKI, Kenji, Sagamihara-shi, 252-5181 (JP)
(74) Representative: MERH-IP Matias Erny Reichl Hoffmann Patentanwälte PartG mbB

(57) **Abstract**

A display device of a press machine includes a calculation part that generates a plurality of images and a display part that displays the plurality of images. The plurality of images includes an annular or arc-shaped first image representing a stroke of a current sliding motion, a second image representing an input range of a sensor signal corresponding to a motion of an accessory device in conjunction with the press machine, and a third image representing a range for monitoring the sensor signal. The second image and the third image are arc-shaped or fan-shaped images concentric with the first image. The second image is displayed on the display part for a predetermined period after the sensor signal stops.

## Description

### BACKGROUND OF THE INVENTION

### Field of the Invention

The present invention relates to a display device of a press machine and a press working monitoring method.

### Description of Related Art

A press machine that displays a sliding motion and a motion of an accessory device using a circular image to set these operations is used (for example, JP-A-2020-179417 and JP-A-2022-148406).

On the other hand, the accessory device, for example a feeding device that sequentially feeds a material to the press machine, receives a cam signal from the press machine and monitors the current feed motion (for example, JP-A-2019-181501).

However, the inventions of JP-A-2020-179417 and JP-A-2022-148406 do not monitor the motion of the current accessory device, and the invention of JP-A-2019-181501 depends on the cam signal, so that only a part of the sliding motion can be monitored. Furthermore, in the invention of JP-A-2019-181501, only a time period from turning on of a material detection signal to turning off of a timing signal or an angle obtained by converting the time period is displayed in numbers, and it is difficult to grasp a time position of a signal for detecting a normal motion of the accessory device in relation to the time period of effective working of the timing signal.

### SUMMARY OF THE INVENTION

The present invention can provide a display device of a press machine and a press working monitoring method that facilitate an operator to visually recognize the relationship between the current sliding motion and the motion of the accessory device.

According to a first aspect of the disclosure, a display device of a press machine
includes a calculation part that generates a plurality of images and a display part that displays the plurality of images, in which
the plurality of images includes
an annular or arc-shaped first image representing a stroke of a current sliding motion,
a second image representing an input range of a sensor signal corresponding to a motion of an accessory device in conjunction with the press machine, and
a third image representing a range for monitoring the sensor signal,
the second image and the third image are arc-shaped or fan-shaped images concentric with the first image, and
the second image is displayed on the display part for a predetermined period after the sensor signal stops.

According to a second aspect of the disclosure, a press working monitoring method includes:
performing press working by moving a slide up and down, and putting an accessory device into motion in conjunction with the press working; and
displaying on a display part an annular or arc-shaped first image representing a stroke of a current sliding motion, a second image representing an input range of a sensor signal corresponding to a motion of the accessory device, and a third image representing a range for monitoring the sensor signal, in which
the second image and the third image are arc-shaped or fan-shaped images concentric with the first image, and
the second image is displayed on the display part for a predetermined time period after the sensor signal stops.

### BRIEF DESCRIPTION OF THE DRAWINGS

FIG. 1 is a front view illustrating a press machine and a feeding device according to the present embodiment.
FIG. 2 is a block diagram of a display device of the press machine according to the present embodiment.
FIG. 3 is an enlarged view illustrating a display part of the press machine according to the present embodiment.
FIG. 4 is a view illustrating differences between images under different settings.
FIG. 5 is an enlarged view illustrating a display part of a press machine according to Modification 1.
FIG. 6 is an enlarged view illustrating a display part of a press machine according to Modification 2.
FIG. 7 is a block diagram of a display device of a press machine according to Modification 3.

### DESCRIPTION OF THE INVENTION

The present invention has been made to solve at least a part of the above-described problems and can be realized as the following aspects or application examples.
[1] One aspect of the present invention is
   a display device of a press machine, the press machine including a calculation part that generates a plurality of images and a display part that displays the plurality of images, in which
   the plurality of images includes
   an annular or arc-shaped first image representing a stroke of a current sliding motion,
   a second image representing an input range of a sensor signal corresponding to a motion of an accessory device in conjunction with the press machine, and
   a third image representing a range for monitoring the sensor signal,
   the second image and the third image are arc-shaped or fan-shaped images concentric with the first image, and
   the second image is displayed on the display part for a predetermined time period after the sensor signal stops.
[2] In one aspect of the display device of the press machine,
   the first image, the second image, and the third image can be one image set,
   the display part simultaneously can display a plurality of image sets, and
   the accessory device can be a feeding device that sequentially feeds a material to the press machine, and
   the second image in the plurality of image sets can represent an input range of each of different sensor signals corresponding to a motion of the feeding device.
[3] In one aspect of the display device of the press machine,
   the display device can be configured to further include a storage part that stores the input range of the sensor signal for each press working,
   the calculation part can be configured to aggregate the input ranges stored in the storage part, and divide the second image into a plurality of regions depending on the number of occurrences in the input ranges, and
   the display part can be configured to display the second image divided into the plurality of regions.
[4] An aspect of a press working monitoring method according to the present invention includes:
   performing press working by moving a slide up and down, and putting into motion an accessory device in conjunction with the press working; and
   displaying on a display part an annular or arc-shaped first image representing a stroke of a current sliding motion, a second image representing an input range of a sensor signal corresponding to a motion of the accessory device, and a third image representing a range for monitoring the sensor signal, in which
   the second image and the third image are arc-shaped or fan-shaped images concentric with the first image, and
   the second image is displayed on the display part for a predetermined time period after the sensor signal stops.

According to one aspect of the display device of the press machine and one aspect of the press working monitoring method according to the present invention, displaying the second image and the third image concentrically with the annular or arc-shaped first image representing one stroke of the sliding motion facilitates the operator to visually recognize the relationship between the current sliding motion and the motion of the accessory device. Further, according to one aspect of the display device of the press machine and one aspect of the press working monitoring method according to the present invention, the second image is displayed on the display part for a predetermined time period after the sensor signal stops, so that the operator can easily visually recognize the relationship between the sliding motion and the motion of the accessory device even when the press machine runs at high speed. Additionally, the operator can easily visually recognize the relationship between the current sliding motion and the motion of the accessory device, so that SPM of the press machine or the running speed of the accessory device can be set in a short time.

Hereinbelow, preferred embodiments of the present invention are described in detail with reference to the drawings. Note that the embodiments described below do not unreasonably limit the contents of the present invention described in the claims. In addition, not all the configurations described below are essential components of the present invention.

### 1. Display device of press machine

A display device of a press machine according to the present embodiment includes a calculation part that generates a plurality of images and a display part that displays the plurality of images. Here the plurality of images includes an annular or arc-shaped first image representing a stroke of a current sliding motion, a second image representing an input range of a sensor signal corresponding to a motion of an accessory device in conjunction with the press machine, and a third image representing a range for monitoring the sensor signal, the second image and the third image are arc-shaped or fan-shaped images concentric with the first image, and the second image is arranged adjacent to the third image and is displayed on the display part for a predetermined time period after the sensor signal stops.

### 1-1. Outline of press machine

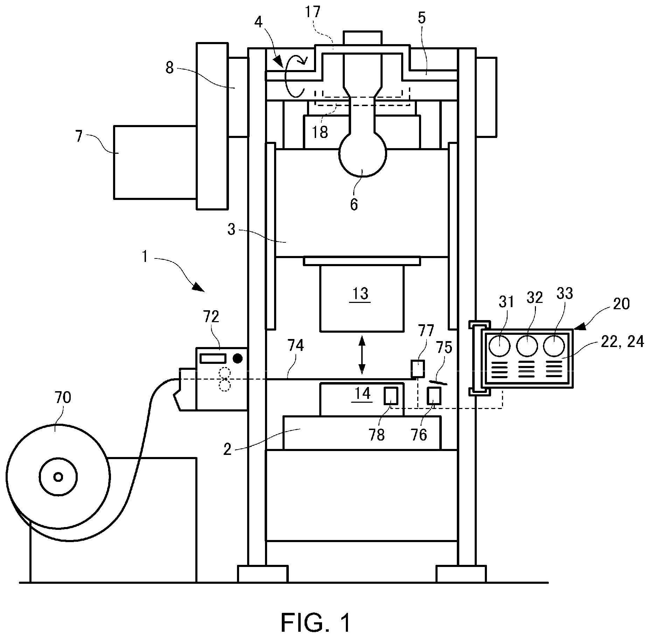

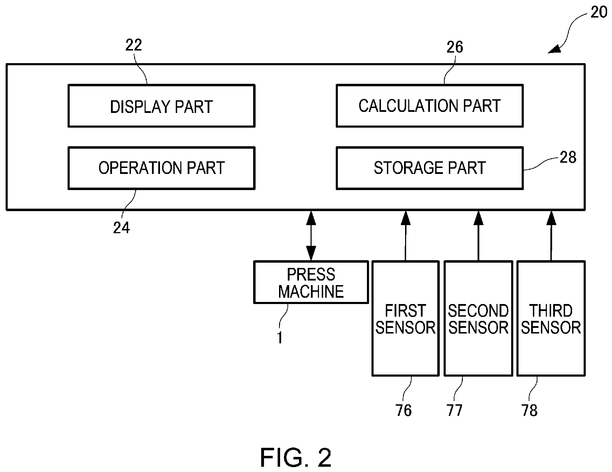

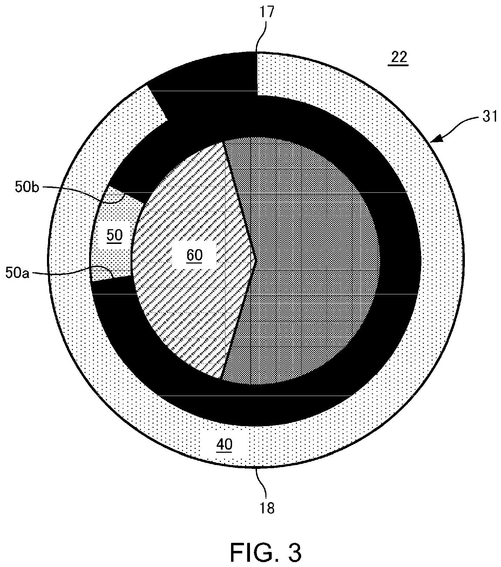

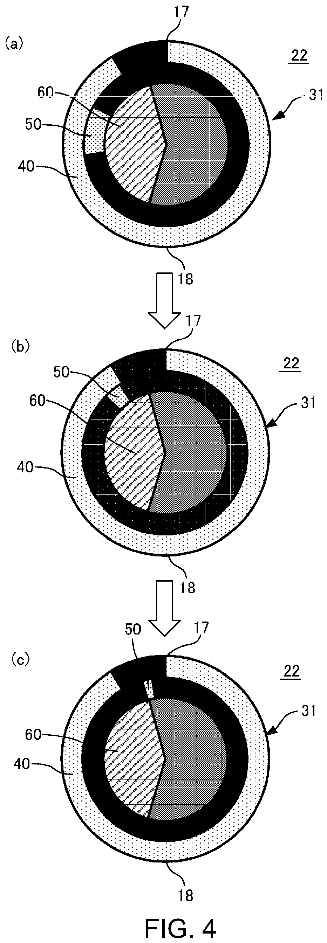

An outline of the press machine 1 will be described with reference to FIGS. 1 to 4. FIG. 1 is a front view illustrating a press machine 1 and a feeding device 72 according to the present embodiment, FIG. 2 is a block diagram of a display device 20 of the press machine 1 according to the present embodiment, FIG. 3 is an enlarged view illustrating a display part 22 of the press machine 1 according to the present embodiment, and FIG. 4 are views describing differences between images under different settings.

As illustrated in FIG. 1, the press machine 1 performs press working by converting rotation of an electric motor 7 into reciprocating linear motion of a slide 3 by an eccentric mechanism 4 that converts the rotational motion into the linear motion. The press machine 1 includes a display device 20 to be described later. Various accessory devices associated with the press machine 1 are arranged, for example, adjacent to the press machine 1 for the press working by the press machine 1. The accessory device may be the feeding device 72 for sequentially feeding a workpiece 74 to the press machine 1. An example of the feeding device 72 as an accessory device will be described in the present embodiment, but the present invention is not limited thereto, and can be applied to known accessory devices. Examples of the known accessory devices include an articulated robot for conveying material and a knockout device. The feeding device 72 is interlocked with the press machine 1. The feeding device 72 repeats a feeding motion of intermittently feeding the workpiece 74 to the press machine 1.

The press machine 1 includes an eccentric mechanism 4 having a crankshaft 5 and a connecting rod 6, an electric motor 7 that drives the eccentric mechanism 4, a speed reduction mechanism 8 that connects the eccentric mechanism 4 and the electric motor 7, and a display device 20 that displays a plurality of image sets 31 to 33 representing the relationship between the press machine 1 and the motion of the accessory device. The press machine 1 may be a servo press machine or a mechanical press machine further including a clutch, a flywheel, and the like.

As the electric motor 7, an AC servomotor (a synchronous motor or an induction motor can be selected), a DC servomotor, or the like can be employed.

The eccentric mechanism 4 is not limited to a crank mechanism using the crankshaft 5, and a crank mechanism having an eccentric shaft can be employed. In addition, a known slide drive mechanism used in the press machine 1, for example, a booster mechanism by a knuckle mechanism, a link mechanism, or the like can be used as the eccentric mechanism 4. Further, a mechanism having an eccentric plate integrated with the main gear can also be used for the same purpose. The crankshaft 5 rotates between a top dead center 17 and a bottom dead center 18 (indicated by a broken line in FIG. 1) by driving of the electric motor 7.

A die (upper die 13 or lower die 14) is fixed to each of a bolster 2 and the slide 3. The slide 3 connected to a lower end side of the connecting rod 6 moves up and down with respect to the bolster 2 by rotating the crankshaft 5 by driving the electric motor 7.

The feeding device 72 is arranged adjacent to the press machine 1 in order to feed, for example, a sheet-like workpiece 74 between the upper die 13 and the lower die 14 in a die open state. In FIG. 1, the feeding device 72 is fixed to one side surface of the press machine 1. The feeding device 72 in the present embodiment is what is called a feeding device including a pair of rollers sandwiching the workpiece 74. The feeding device 72 intermittently feeds the workpiece 74 a predetermined distance into a space between the dies of the press machine 1 in accordance with a pressing motion according to a preset feeding motion. The feeding device 72 may include an uncoiler 70 that holds the workpiece 74 and a plurality of sensors 76 to 78 for detecting various states related to the feeding operation. The feeding device 72 may be retrofitted to the press machine 1 as an accessory device, or may be provided in advance as a part of the press machine 1. Although an example of a feeding device that feeds the workpiece 74 in one direction will be described, the feeding device 72 may be a known transfer device that holds and conveys the workpiece 74 with a plurality of fingers attached to a feed bar. In addition, the following description relates to an example in which the feeding device 72 includes the first sensor 76, the second sensor 77, and the third sensor 78, but the invention is not limited thereto, and the feeding device 72 may further include a known sensor related to the feeding motion.

The uncoiler 70 winds and holds the sheet-like workpiece 74 in a coil shape, and rotates the coil-like workpiece 74 to feed the coil-like workpiece to the feeding device 72 at a constant speed.

The first sensor 76 may be what is called a product ejection detector that ascertains that the pressed product has been ejected. The first sensor 76 is fixed to the press machine 1 and is disposed at a position that the product 75 ejected from the die passes by. The first sensor 76 is, for example, a photoelectric sensor and may include a light emitting unit and a light receiving unit, and may be configured to output a sensor signal by the product 75 blocking light from the light emitting unit. The signal of the first sensor 76 is output to the display device 20 in response to the feeding motion of the workpiece 74 in conjunction with the press machine 1. The signal output of the first sensor 76 starts when the product 75 blocks the light of the light emitting unit and the light amount received by the light receiving unit begins to change, and continues until the product 75 passes by the first sensor 76 and the light amount of the light receiving unit is recovered. While the display device 20 receives the signal input, a calculation part 26 to be described later can calculate as an angle of the crankshaft 5 a passing time of the product 75.

The second sensor 77 may be what is called a misfeed detector having a function of ascertaining that the workpiece 74 has been fed to a predetermined position (feed completion) by the feeding device 72. The second sensor 77 is fixed to the press machine 1, for example, and is disposed on the side opposite to the feeding device 72 with the die interposed therebetween. The second sensor 77 may be disposed at any position as long as it can detect that the workpiece 74 is at a feed completion position for start of the press working in the next step. The second sensor 77 may be of a contact type that comes into contact with and detects a distal end of the workpiece 74 in the feeding direction, or may be of a non-contact type using an optical sensor or a magnetic sensor. A signal output of the second sensor 77 starts when the workpiece 74 reaches the predetermined position, and continues until the product 75 is ejected from the die. While the display device 20 receives the signal input, the calculation part 26 can calculate as the angle of the crankshaft 5 the time period during which the signal is input.

The third sensor 78 may be what is called a scrap detector for ascertaining that scrap by punching at the time of press working has been ejected. The third sensor 78 is fixed to the lower die 14 and is disposed at a position that the scrap passes by when the scrap is ejected. The third sensor 78 is, for example, a photoelectric sensor, and may be configured to output a sensor signal while the scrap blocks light from a light emitting unit. The signal output of the third sensor 78 continues while the ejected scrap passes through the predetermined range of the ejecting portion. While the display device 20 receives the signal input from the third sensor 78, the calculation part 26 can calculate as the angle of the crankshaft 5 the ejection time of the scrap during which the signal input takes place.

### 1-2. Display device

As illustrated in FIG. 2, the display device 20 includes the calculation part 26 that generates a plurality of images 40, 50, and 60 (FIG. 3), and a display part 22 that displays the plurality of images 40, 50, and 60. Further, the display device 20 can further include an operation part 24 that receives an input operation to the display device 20, and a storage part 28 that stores a program and the like. The display part 22, the operation part 24, the calculation part 26, and the storage part 28 are electrically connected to each other. In addition, the display device 20 can transmit and receive electrical signals to and from the press machine 1, and can receive electrical signals from the first sensor 76, the second sensor 77, and the third sensor 78.

As illustrated in FIG. 1, the display device 20 may be also attached to the press machine 1, and is electrically connected to, for example, the press machine 1 and the feeding device 72. The display device 20 may be a control device of the press machine 1 on which an operator for the press machine 1 performs various settings and operations of the press machine 1. If the display device 20 is a control device for the press machine 1, it is possible to generate an image with higher accuracy than a conventional detector that acquires a timing signal from the press machine 1. The display device 20 may be also a control device of the feeding device 72 that further performs various settings and operations of the feeding device 72, or may transmit and receive various signals to and from the feeding device 72. The display device 20 may be a part of the press machine 1 or an external device that can electrically access each part of the press machine 1. The display device 20 may be housed in one housing or its different parts may be housed separately in a plurality of housings.

The display part 22 can display the image stored in the storage part 28 and the image generated by the calculation part 26. The display device 20 will be described as a part of the control device of the press machine 1, but is not limited thereto, and may be a display device independent of the control device of the press machine 1. The display part 22 may be, for example, a display of a portable terminal such as a tablet personal computer or a smartphone, and the portable terminal may further perform some of functions of the display device 20 including those of the calculation part 26. In this case, both the display part 22 and the main body of the display device 20 have a communication function for transmitting and receiving data. The display part 22 is a liquid crystal display (LCD). Other known display devices (for example, organic electro luminescence (EL) or the like) may be used as the display part 22. Various user interfaces (graphical user interfaces (GUIs)) for the operator can be displayed on the display part 22.

The operation part 24 is provided integrally with the display part 22, for example. The operation part 24 can be of a touch panel type, wherein it is provided integrally with the display part 22. An input operation to the operation part 24 can be performed by a touch operation. The touch panel type operation part 24 can be operated by directly touching the display part 22 with a finger or a pen. As the touch panel, a touch panel of a known type such as a resistive film type, a capacitance type, a surface capacitance type, or a projection capacitance type can be used. The operation part 24 is not limited to a touch panel type integrated with the display part 22, and may be a panel detachable from the display part 22, or a known input means (for example, a mouse, a trackball, a keyboard, or the like) provided separately from the display part 22 may be employed.

The calculation part 26 is a central processing unit (CPU), and can execute a program stored in the storage part 28. The calculation part 26 can execute processes of generating the images 40, 50, and 60 (FIG. 3) and the like and displaying the generated images 40, 50, and 60 on the display part 22. In addition, the calculation part 26 can execute various types of process according to an input operation to the operation part 24 by the operator. The calculation part 26 may execute a press working process.

The storage part 28 stores a program of the press machine 1, setting data of a range for monitoring a sensor signal, and the like. In a case where the display device 20 is a control device of the press machine 1, the calculation part 26 outputs a command to a servomotor, which is the electric motor 7 in this case, according to data of a sliding motion stored and set in the storage part 28, and the servomotor is driven according to the command to operate the slide 3 according to the data of the sliding motion set in advance. In addition, the calculation part 26 may operate the feeding device 72 according to the data of the feed action stored and set in the storage part 28. The storage part 28 can store a preset image, the images 40, 50, and 60 generated by the calculation part 26, and the like.

### 1-3. Image

As illustrated in FIG. 1, the display part 22 of the display device 20 can simultaneously display, for example, a plurality of image sets 31 to 33. Three image sets 31 to 33 are illustrated in FIG. 1, but one or more image sets as many as sensors may be displayed, provided that they are recognizable by the operator. The following description relates almost exclusively to first image set 31, given the similarity in basic configurations of the three image sets 31 to 33.

As illustrated in FIG. 3, the first image set 31 is an aggregate of a plurality of images 40, 50, and 60. The plurality of images 40, 50, and 60 includes an annular or arc-shaped first image 40 representing one stroke of the current sliding motion, a second image 50 representing an input range of the sensor signal corresponding to the motion of the accessory device (the feeding device 72 in the present embodiment) in conjunction with the press machine 1, and a third image 60 representing a range for monitoring the sensor signal. In the example of FIG. 3, the first image 40, the second image 50, and the third image 60 form one first image set 31. The first image 40, the second image 50, and the third image 60 may be displayed in different colors or in shades of similar colors. Note that, in FIG. 3, different colors are represented by different shading due to the restriction of the drawing.

The second image 50 and the third image 60 are arc-shaped or fan-shaped images concentric with the first image 40. The first image 40 is displayed on the outermost periphery, then more inward the second image 50 and further inward the third image 60, but the order of the plurality of images 40, 50, and 60 is not limited thereto as long as all the images are concentric with the first image 40. The third image 60 represents a preset range, and thus can be always displayed on the display part 22. Since the first image 40 and the second image 50 display the current state, an annular frame is displayed before the press working starts.

The first image 40 is an arc-shaped image in which an annular region in black shows its color and then gradually extends so as to go from the top dead center 17 to the bottom dead center 18 then back to the top dead center 17 in response to the rotational motion of the eccentric mechanism 4 of the press machine 1. The first image 40 has an upper end corresponding to the top dead center 17 of the crankshaft 5 and a lower end corresponding to the bottom dead center 18 of the crankshaft 5. In a case where the display device 20 is a part of the control device of the press machine 1, the current sliding motion can be accurately reflected in the first image 40 on the basis of information from a sensor that is not illustrated of the press machine 1. That is, the first image 40 can represent a real-time sliding motion. Here, the information from the sensor that is not illustrated can be selected from, for example, rotation angle data from an encoder provided in the electric motor 7, rotation angle data from an encoder provided in the eccentric mechanism 4, slide position information from a linear scale attached to the slide 3, and the like. In FIG. 3, while the first image 40 has an arc shape showing that one stroke is almost completed, the first image 40 forms an entire ring at the top dead center 17, and then the first image 40 totally disappears just thereafter and later shows its color again and its arc gradually extends. The first image 40 is a band-shaped image that is wide for easy recognition, and is arranged on the outermost periphery of the first image set 31. Although the example in which the first image 40 starts to rotate from the top dead center 17 and returns to the top dead center 17 has been described, the first image 40 is not limited thereto, and the first image 40 can be an image matched with one stroke of another sliding motion. For example, the first image 40 may start rotating from a designated angle (set point) other than the top dead center 17 and show its color again and extend to pass by the bottom dead center 18 and then reach the designated angle (the set point). Further, it may rotate to the left, not only rotating to the right. For example, the first image 40 in the pendulum movement may be an arc showing its color and thus extending from one extreme position between the top dead center 17 and the bottom dead center 18 to the other extreme position via the bottom dead center 18, or showing its color and thus extending from the other extreme position to the one extreme position.

For example, the second image 50 is disposed adjacent to the third image 60. Such relative positions of the second image 50 and the third image 60 adjacent to each other facilitates the operator to grasp interrelations between them. The second image 50 is displayed on a lane between the outer first image 40 and the inner third image 60. The order of the first image 40, the second image 50, and the third image 60 from the center of the circular ring is not limited to the example of FIG. 3. In addition, the first image 40, the second image 50, and the third image 60 may be arranged apart from each other as long as interrelations between them can be recognized. The second image 50 represents an input range of the sensor signal of the first sensor 76 output by the passage of the ejected product 75. The second image 50 is displayed by converting the input of the sensor signal into a crank angle. Thus, it is easy to compare the crank angle with the sliding motion of the first image 40. The second image 50 is displayed on the display part 22 for a predetermined time period after the sensor signal output from the first sensor 76 stops. The predetermined time period is preferably longer than the sensor signal input and ends before the sensor signal in the next cycle is input. The second image 50 is displayed longer than the conventional second image, which is displayed only for a short time during which the sensor signal input takes place. This facilitates the operator to visually recognize the relationship between the sliding motion and the motion of the accessory device (feeding device 72) even when the press machine 1 runs at high speed. In this manner, the operator can easily visually recognize the relationship between the current sliding motion and the motion of the accessory device, so that the operator can set the SPM of the press machine or the operation speed of the accessory device in a short time.

An input start angle 50a of the second image 50 corresponds to the crank angle of the sliding motion when the product 75 blocks the light of the light emitting unit of the first sensor 76 and the light amount received by the light receiving unit begins to change, and an input end angle 50b corresponds to the crank angle of the sliding motion when the product 75 passes by the first sensor 76 and the light amount of the light receiving unit is recovered. Therefore, comparing the second image 50 with the first image 40 enables the operator to recognize at a glance at which angle the product 75 has passed through the first sensor 76 in its sliding motion.

Note that, although the above description relates to the first image set 31, the second images 50 in the plurality of image sets 31 to 33 can each represent an input range of different sensor signals corresponding to the motion of the feeding device 72. For example, the second image 50 of the second image set 32 may represent an input signal from the second sensor 77, and the second image 50 of the third image set 33 may represent an input signal from the third sensor 78. Displaying the input ranges of the different sensor signals side by side enables the operator to comprehensively grasp the states of the accessory devices. Thus, the operator can determine abnormality without fail and change the setting early.

The third image 60 is arranged inside the second image 50 and on the center side in the first image set 31. The third image 60 has a fan shape being a part of a circle having a radius smaller than that of the second image 50. The remaining portion of the circle other than the third image 60 displayed in the fan shape may be displayed in a color different from that of the third image 60. The third image 60 is set in advance prior to the press working. Preferably, the third image 60 is always displayed while the first image set 31 is displayed on the display part 22, for example, during the production process of the press machine 1. The third image 60 represents a range for monitoring the sensor signal from the first sensor 76 in the sliding motion of one stroke. That is, the range of the crank angle corresponding to the angle of the third image 60 is the range for monitoring the second image 50. In FIG. 3, a range from an angle exceeding the bottom dead center 18 by about 15 degrees (195 degrees) to about 15 degrees (345 degrees) before the top dead center 17 (0 degree and 360 degree) is set for monitoring. The monitoring range means that the signal input from the first sensor 76 is normal, and when the signal input from the first sensor 76 exceeds this range, the calculation part 26 displays an error signal image (not illustrated) on the display part 22. In this manner, displaying the second image 50 and the third image 60 concentrically with the annular or arc-shaped first image 40 representing one stroke of the sliding motion facilitates the operator to visually recognize the relationship between the current sliding motion and the motion of the accessory device.

For example, the second image 50 that is displayed near the center of the angular range of the third image 60 (as illustrated in FIG. 4 (a)) reduces the frequency of the error signal output even if the ejection of the product 75 more or less fluctuates every cycle, and prevents frequent stops of the press machine 1. Accordingly, an increase in the production amount by changing the SPM results in a display of the second image 50 as a short strip near the end of the third image 60 as illustrated in FIG. 4 (b). In the production process in which the second image 50 is displayed on the end side (near the top dead center 17) of the third image 60, the error signal is always output once the ejection of the product 75 is slightly delayed, which leads to frequent stops of the production. When a further increase in production amount by changing the SPM lengthens the second image 50 beyond the angular range of the third image 60 as illustrated in FIG. 4 (c), and triggers the error signal output and stop of the press machine 1. The operator can check the position and range of the second image 50 with respect to the third image 60 and set SPM or feed speed to an appropriate value.

In addition, a display of the second image 50 is over a predetermined time period facilitates the operator to recognize the position at which the display takes place within an angle range of the third image 60 and the size of the angle range for display of the second image 50. Then, based on this recognition, the operator can perform in a short time or at an early stage of production process manipulations, for e.g. changing the feeding speed of the workpiece 74 or changing the SPM so that the second image 50 is positioned near the center of the angular range of the third image 60.

The storage part 28 can store, for example, the second image 50 in a normal state and the second image 50 in which the error signal is detected. The operator can cause the display part 22 to display these second images 50 stored in the storage part 28, and compares both to find a cause for the error signal. For example, in a case where an error in the second image 50 simply derives from its position beyond the end of the third image 60, one can assert that the start of the motion of the feeding device 72 is delayed. In addition, for example, in a case where the second image 50 determined as error has a wider angular range than the normal state, one can assert that rattle in the workpiece 74 has occurred.

The second image 50 may be further so configured that the second image 50 in the previous cycle and the second image 50 in the current cycle are displayed in different colors or different shades in an overlapping manner for a predetermined time, for example, until the start of the next cycle. In that case, it is preferable to make the display of the second image 50 in the current cycle more vivid than the previous cycle. Displaying the two second images 50 in an overlapping manner as described above enables the operator to recognize scatter in the input timing of the sensor signal at an early stage.

### 2. Press working monitoring method

A press working monitoring method will be described with reference to FIGS. 1 to 3, based on the press machine 1 and the display device 20 described in "1. Display device of press machine".

The press working monitoring method according to the present embodiment, while it performs press working by moving the slide 3 up and down using the press machine 1, puts into motion an accessory device such as the feeding device 72 in conjunction with the press working, and displays on the display part 22 an annular or arc-shaped first image 40 representing one stroke of a current sliding motion, a second image 50 representing an input range of a sensor signal corresponding to the motion of the accessory device, and a third image 60 representing a range for monitoring the sensor signal.

The sliding motion can be set in advance by the control device of the press machine 1, for example, the display device 20 before the press working. In addition, the operator can compare the second image 50 and the third image 60 displayed on the display part 22 during the press working and change the SPM to an appropriate value.

The range for monitoring the sensor signal can be set in advance by the operation part 24 of the display device 20 before press working. The set range to be monitored is stored in the storage part 28, and is calculated as an angular range corresponding to the crank angle by the calculation part 26 to generate the third image 60. The calculation part 26 can display the third image 60 on the display part 22 already before the press working.

When the press working starts, the first image 40 extends clockwise along a preset annular region in accordance with the rotation of the crankshaft 5. When the display device 20 receives a signal input from the first sensor 76, the calculation part 26 displays the second image 50 on the display part 22. The second image 50 and the third image 60 are arc-shaped or fan-shaped images concentric with the first image 40. The second image 50 extends clockwise along a preset circle while the signal input from the first sensor 76 continues. As the second image 50 and the third image 60 are simultaneously displayed concentrically with the annular or arc-shaped first image 40 representing one stroke of the sliding motion, the operator can easily visually recognize the relationship between the current sliding motion and the motion of the accessory device (the feeding device 72 in the present embodiment).

Further, the second image 50 is displayed on the display part 22 for a predetermined time period after the sensor signal stops. The second image 50, which is displayed on the display part 22 for a predetermined time period after the sensor signal stops, facilitates the operator to visually recognize the relationship between the sliding motion and the motion of the accessory device even when the press machine 1 runs at a high speed. Then, the operator can easily visually recognize the relationship between the current sliding motion and the motion of the accessory device, so that it is possible to set in a short time the operation speed of the SPM of the press machine 1 or the accessory device.

### 3. Modification 1

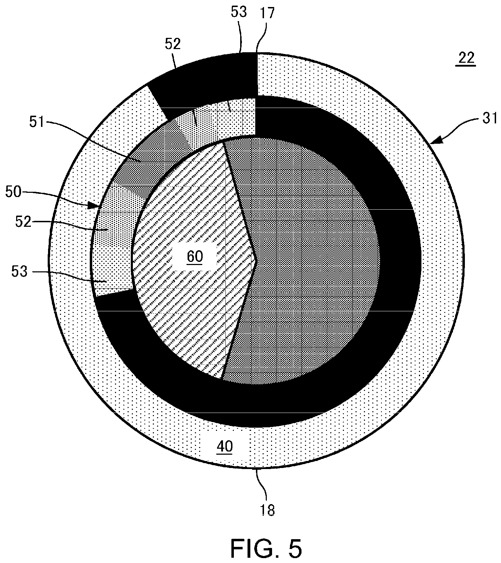

A display device 20 according to Modification 1 will be described with reference to FIGS. 1, 2, and 5. FIG. 5 is an enlarged view illustrating the display part 22 of the press machine 1 according to Modification 1. Note that in Modification 1 only difference lies in the second image 50 illustrated in FIG. 5, as is different from the second image 50 illustrated in FIG. 3, and in this manner, other redundant explanations will be omitted.

The display device 20 can further include the storage part 28 that stores the input range of the sensor signal for each press working. Then, the calculation part 26 aggregates the input ranges stored in the storage part 28, and divides the second image 50 into a plurality of regions 51 to 53 depending on the number of occurrences of the input ranges.

As illustrated in FIG. 5, the display part 22 displays the second image 50 divided into the plurality of regions 51 to 53. The plurality of regions 51 to 53 is displayed on the same circular ring image.

The first region 51 is an image representing the input range of the sensor signal from the first sensor 76 in the current cycle. It is preferable to display the first region 51 in a brighter color or with higher luminance than the other regions 52 and 53, as it facilitates to recognize the display. The second region 52 is an image representing an average range among the input ranges of the sensor signals in the past sessions of press working. The calculation part 26 can aggregate and calculate the average range . It is preferable to display the second region 52 in a brighter color or with higher luminance than the third region 53, as it facilitates to recognize the second region 52 in distinguishing it from the third region 53. The third region 53 is an image representing a range including scatters in the input ranges of the sensor signals in the past sessions of press working. The calculation part 26 can aggregate and calculate the range including scatters for example as a range of 1σ (σ is a standard deviation). Further, a range of 2σ may be displayed as the fourth region.

A display in this manner facilitates the operator to recognize an approximate angular location of the input range (first region 51) of the sensor signal in the current cycle within the average range (second region 52) or the range (third region 53) including scatters, or beyond such ranges.

Conventionally, even in an abnormality in the press machine detected by the feed error detection device based on a delay in the input angle of the sensor signal and stop of the production process in the press machine, it is difficult to determine whether the situation occurs accidentally or can be prevented by settings. Then, a delay in the input angle of the sensor signal resulting in frequent stops of the production process leads to a decrease in the production amount. In Modification 1, the calculation part 26 aggregates the input ranges of the sensor signals and separately displays the average range (the second region 52) and the range (the third region 53) including scatters, so that the first region 51 enables the operator to identify the delay in the input angle of the sensor signal, which occurs accidentally and thus it is conventionally difficult to distinguish. The operator can prevent a decrease in the production amount by changing the setting to a feeding speed, an SPM, or the like to hinder the third region 53 from extending beyond the end of the third image 60. In addition, since the operator can grasp the tendency of the accidentally occurring input angle of the sensor signal, he can further investigate the cause.

In addition, the above-described press working monitoring method can be executed using the display device 20 according to Modification 1.

### 4. Modification 2

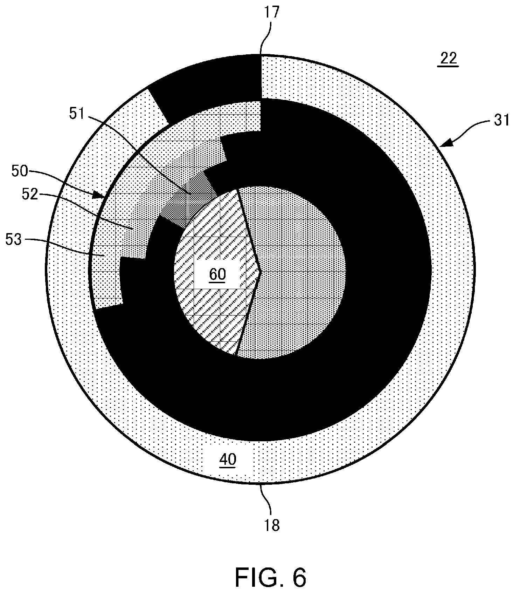

A display device 20 according to Modification 2 will be described with reference to FIGS. 1, 2, and 6. FIG. 6 is an enlarged view illustrating the display part 22 of the press machine 1 according to Modification 2. Note that, in Modification 2 only difference lies in the arrangement of the plurality of regions 51 to 53 illustrated in FIG. 6, as is different from the arrangement of the plurality of regions 51 to 53 illustrated in FIG. 5, and in this manner, other redundant explanations will be omitted.

As illustrated in FIG. 6, the plurality of regions 51 to 53 is displayed concentrically with different radii. The first region 51, the second region 52, and the third region 53 are displayed in this order from the side close to the third image 60. The position of the first region 51 adjacent to the third image 60 facilitates to compare the feed motion in this cycle. In addition, the plurality of regions 51 to 53 may be displayed in this order from the side close to the first image 40. A display of the plurality of regions 51 to 53 in arcs having different radii facilitates to identify the plurality of regions. In addition, the plurality of regions 51 to 53 may be displayed in different colors or shades for easy identification. The above-described press working monitoring method can be executed using the display device 20 according to Modification 2.

### 5. Modification 3

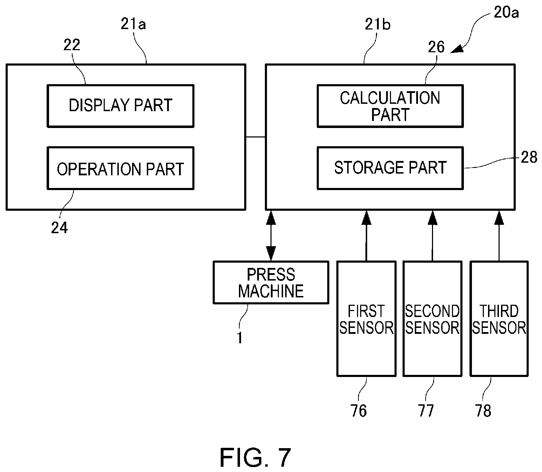

A display device 20a according to Modification 3 will be described with reference to FIG. 7. FIG. 7 is a block diagram of the display device 20a of the press machine 1 according to Modification 3. Note that the function of each part of the display device 20a according to Modification 3 is basically the same as that of each part of the display device 20 illustrated in FIG. 2, and in this manner, redundant explanations will be omitted.

As illustrated in FIG. 7, the display device 20a includes a display unit 21a and a control unit 21b. The display unit 21a may have a housing independent of the housing of the control unit 21b. A frame surrounding each of the display unit 21a and the control unit 21b may be a housing. The display unit 21a is electrically connected to the control unit 21b, which enables the display unit 21a to transmit and receive an electrical signal to and from the control unit 21b.

The display unit 21a includes a display part 22 and an operation part 24. The display unit 21a may be, for example, a liquid crystal display or the like including a touch panel, or may be a tablet terminal including a touch panel.

The control unit 21b may be disposed away from the display unit 21a, or may be disposed adjacent to the display unit 21a. A possibility of arranging the control unit 21b independently of the display unit 21a assures an excellent degree of freedom in arrangement for each unit. The control unit 21b includes the calculation part 26 and the storage part 28. The control unit 21b can transmit and receive electrical signals to and from the press machine 1, and can receive electrical signals from the first sensor 76, the second sensor 77, and the third sensor 78.

The present invention is not limited to the above-described embodiment but various modifications are possible. The present invention includes substantially the same configuration (a configuration having the same function, method, and result, or the one having the same purpose and effect) as the configuration described in the embodiment. In addition, the present invention includes a configuration in which a non-essential part of the configuration described in the embodiment is replaced. In addition, the present invention includes a configuration that achieves the same operation and effect or a configuration that can achieve the same object as the configuration described in the embodiment. In addition, the present invention includes a configuration obtained by adding a known technique to the configuration described in the embodiment.

## Claims

1. A display device of a press machine, the press machine comprising a calculation part that generates a plurality of images and a display part that displays the plurality of images,
the plurality of images including
an annular or arc-shaped first image representing a stroke of a current sliding motion,
a second image representing an input range of a sensor signal corresponding to a motion of an accessory device in conjunction with the press machine, and
a third image representing a range for monitoring the sensor signal,
the second image and the third image being arc-shaped or fan-shaped images concentric with the first image, and
the second image displayed on the display part for a predetermined time period after the sensor signal stops.

2. The display device of the press machine according to claim 1, wherein
the first image, the second image, and the third image are one image set,
the display part simultaneously displays a plurality of image sets, and
the accessory device is a feeding device that sequentially feeds a material to the press machine, and
the second image in the plurality of image sets represents an input range of each of different sensor signals corresponding to a motion of the feeding device.

3. The display device of the press machine according to claim 2, wherein
one of the different sensor signals is a signal output by a misfeed detector that ascertains that the material is sent to a predetermined position by the feeding device, and
another one of the different sensor signals is a signal from a product ejection detector that ascertains that a product pressed by the press machine has been ejected.

4. The display device of the press machine according to claim 2, wherein
one of the different sensor signals is a signal output by a misfeed detector that ascertains that the material is sent to a predetermined position by the feeding device, and
another one of the different sensor signals is a signal from a scrap detector that ascertains that scrap generated at a time of press working in the press machine has been ejected.

5. The display device of the press machine according to any one of claim 1 to claim 4, wherein
the display device is configured to further comprise a storage part that stores the input range of the sensor signal for each press working,
the calculation part is configured to aggregate the input ranges stored in the storage part, and divide the second image into a plurality of regions depending on the number of occurrences of the input ranges, and
the display part is configured to display the second image divided into the plurality of regions.

6. The display device of the press machine according to claim 1, wherein
an upper end of the first image corresponds to a top dead center in an eccentric mechanism of the press machine, and
a lower end of the first image corresponds to a bottom dead center in the eccentric mechanism of the press machine.

7. The display device of the press machine according to claim 1, wherein
the second image is displayed on a lane sandwiched between the first image and the third image.

8. A monitoring method of press working, comprising:
performing press working by moving a slide up and down, and putting into motion an accessory device in conjunction with the press working; and
displaying on a display part an annular or arc-shaped first image representing a stroke of a current sliding motion, a second image representing an input range of a sensor signal corresponding to a motion of the accessory device, and a third image representing a range for monitoring the sensor signal, wherein
the second image and the third image are arc-shaped or fan-shaped images concentric with the first image, and
the second image is displayed on the display part for a predetermined period after the sensor signal stops.
